(19) **Europäisches Patentamt / European Patent Office / Office européen des brevets**

(11) **EP 4 397 798 A1**

(12) # EUROPEAN PATENT APPLICATION
published in accordance with Art. 153(4) EPC

(43) Date of publication:
**10.07.2024 Bulletin 2024/28**

(21) Application number: **22864347.4**

(22) Date of filing: **23.08.2022**

(51) International Patent Classification (IPC):
**D04H 3/011** (2012.01)      **A41D 13/11** (2006.01)
**A61F 13/15** (2006.01)      **D04H 1/435** (2012.01)

(52) Cooperative Patent Classification (CPC):
**A41D 13/11; A61F 13/15; D04H 1/435; D04H 3/011**

(86) International application number:
**PCT/JP2022/031764**

(87) International publication number:
**WO 2023/032763 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2021   JP 2021140257**

(71) Applicant: **Mitsui Chemicals Asahi Life Materials Co., Ltd.**
**Tokyo 104-0028 (JP)**

(72) Inventors:
• **FUJIMOTO, Yuya**
**Tokyo 100-0006 (JP)**
• **SAKAMOTO, Yuichiro**
**Tokyo 100-0006 (JP)**
• **KUSAKABE, Junichi**
**Tokyo 100-0006 (JP)**
• **FUKUNAGA, Akihisa**
**Tokyo 100-0006 (JP)**
• **SHIOTA, Eiji**
**Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) ## BIODEGRADABLE NONWOVEN FABRIC AND USE OF SAME

(57)    The present invention provides a biodegradable nonwoven fabric which has biodegradability, while having extremely excellent texture, or having good formability and being suppressed in fluffing in an embossed part during forming. One embodiment of the present invention provides: a biodegradable nonwoven fabric which is configured from fibers that contain a biodegradable thermoplastic resin, and is characterized in that the shear viscosity thereof is more than 0 Pa·s but not more than -41.4 × ln(x) + 500.84 Pa·s at a shear rate x (x is from 20/s to 10,000/s) at 230°C, or is characterized in that the biodegradable nonwoven fabric has an embossed part and a non-embossed part, and the embossed part thickness index that is obtained by dividing the thickness of the embossed part by the square root of weight is 2.75 to 4.36 mm/(g/m$^2$)$^{0.5}$; or a food filter such as a coffee filter or a filter for tea bags, a mask, a diaper, an agricultural material or a lightweight packaging material, each of which comprises this biodegradable nonwoven fabric.

EP 4 397 798 A1

**Description**

FIELD

The present invention relates to a biodegradable nonwoven fabric and to its use.

BACKGROUND

Biodegradable nonwoven fabrics have conventionally been made of various biodegradable resins such as polylactic acid, and with increasing focus on promoting sustainability in recent years, they continue to be developed for a greater variety of fields and purposes. However, most biodegradable resins tend to be hard, making it difficult to obtain excellent texture for nonwoven fabrics (the material feel perceived when touched by a human, including the hand feel, texture on the skin and wearing comfort).

Molded articles comprising biodegradable nonwoven fabrics are known in the prior art and are used in a variety of fields for an increasingly wide range of purposes. Molded articles can be obtained by thermoforming nonwoven fabrics.

PTL 1 discloses a biodegradable nonwoven fabric with excellent bulk and bending softness, obtained by forming a nonwoven fabric web from irregularly shaped crimped fibers, and ensuring at least a fixed interval for the embossing interval.

PTL 2 discloses a biodegradable nonwoven fabric for thermoforming, composed of polylactic acid-based copolymer fibers and having a basis weight of 20 to 350 g/m$^2$, whereby it is possible to rapidly obtain a molded article with the proper form without tearing during thermoforming and with few stretch marks, and wherein the handleability during thermoforming is satisfactory and the nonwoven fabric is able to adapt to complex molding shapes during thermoforming, thus allowing molded articles with excellent design properties to be obtained.

[CITATION LIST]

[PATENT LITERATURE]

[PTL 1] International Patent Publication No. WO2021/054465
[PTL 2] International Patent Publication No. WO2018/070490

SUMMARY

[TECHNICAL PROBLEM]

There is a demand for biodegradable nonwoven fabrics with more excellent texture than the biodegradable nonwoven fabric described in PTL 1.

There is also demand for thermoforming biodegradable nonwoven fabrics that have less napping of embossed sections during molding, compared to the biodegradable nonwoven fabric described in PTL 2.

In light of the problems of the prior art, it is a first object of the invention to provide a biodegradable nonwoven fabric having both biodegradability and a very excellent texture.

It is a second object of the invention to provide a thermoforming biodegradable nonwoven fabric for thermoforming which is biodegradable, with satisfactory formability, and with reduced napping of embossed sections during molding.

[SOLUTION TO PROBLEM]

After conducting much ardent research with the aim of achieving the aforementioned first object, the present inventors focused on the properties of nonwoven fabrics, and found, unexpectedly, that highly satisfactory texture is exhibited by a biodegradable nonwoven fabric that is composed of fibers that include a biodegradable thermoplastic resin, and that has a shear viscosity of higher than 0 Pa·s and no greater than $-41.4 \times \ln(x) + 500.84$ Pa·s (where $\ln(x)$ is the natural logarithm, and the "$\times$" preceding the natural logarithm is added for clarity), at 230°C, assuming a shear rate "x" (where x is 20/s to 10,000/s).

After conducting further research with the aim of achieving the second object, the present inventors also found, unexpectedly, that a biodegradable nonwoven fabric composed of fibers that include a biodegradable thermoplastic resin, having embossed sections and non-embossed sections, wherein the embossed section thickness index, as the embossed section thickness divided by the square root of the basis weight, is 2.75 to 4.36 mm/(g/m$^2$)$^{0.5}$, exhibits satisfactory moldability and reduced napping of the embossed sections during molding.

Specifically, one aspect of the invention is as follows.

[1] A biodegradable nonwoven fabric composed of fibers that include a biodegradable thermoplastic resin, wherein the shear viscosity is higher than 0 Pa·s and no greater than -41.4 × ln(x) + 500.84 Pa·s at 230°C, assuming a shear rate "x" (where x is 20/s to 10,000/s).

[2] The biodegradable nonwoven fabric according to [1] above, wherein the shear viscosity is -5.45 × ln(x) + 50.759 Pa·s or greater at 230°C, assuming a shear rate "x" (where x is 20/s to 10,000/s).

[3] The biodegradable nonwoven fabric according to [1] or [2] above, wherein the shear viscosity is -36.8 × ln(x) + 366.03 Pa·s or less at 230°C, assuming a shear rate "x" (where x is 20/s to 10,000/s).

[4] The biodegradable nonwoven fabric according to any one of [1] to [3] above, wherein the shear viscosity is -25.46 × ln(x) + 257.11 Pa·s or less at 230°C, assuming a shear rate "x" (where x is 20/s to 10,000/s).

[5] The biodegradable nonwoven fabric according to any one of [1] to [4] above, wherein the glass transition temperature is 25°C or lower, as measured with temperature increase at a rate of 10°C/min using a differential scanning calorimeter.

[6] The biodegradable nonwoven fabric according to any one of [1] to [5] above, wherein the biodegradable thermoplastic resin is one or more selected from the group consisting of polybutylene succinate adipate, polybutylene adipate terephthalate, polyhydroxy butyrate valerate and polyhydroxy butyrate butyrate.

[7] The biodegradable nonwoven fabric according to [6] above, wherein the biodegradable thermoplastic resin is polybutylene adipate terephthalate.

[8] The biodegradable nonwoven fabric according to any one of [1] to [7] above, which has embossed sections and non-embossed sections, the embossed section thickness index, as the thickness of the embossed sections divided by the square root of the basis weight, being 2.75 to 4.36 mm/(g/m$^2$)$^{0.5}$.

[9] The biodegradable nonwoven fabric according to any one of [1] to [8] above, wherein based on polarized Raman spectroscopy of the fibers forming the biodegradable nonwoven fabric, the value I∥/I⊥ of the ratio of the peak intensity I∥ at 1612 cm$^{-1}$ in the Raman spectrum measured with polarized light parallel to the fiber axes with respect to the peak intensity I⊥ at 1612 cm$^{-1}$ in the Raman spectrum measured with polarized light perpendicular to the fiber axes is higher than 1.08 and 2.9 or lower.

[10] The biodegradable nonwoven fabric according to any one of [1] to [9] above, which is for thermoforming.

[11] A food filter which includes a biodegradable nonwoven fabric according to any one of [1] to [10] above.

[12] The food filter according to [11] above, which is a coffee filter or tea bag filter.

[13] A mask which includes a biodegradable nonwoven fabric according to any one of [1] to [10] above.

[14] A diaper which includes a biodegradable nonwoven fabric according to any one of [1] to [10] above.

[15] An agricultural material which includes a biodegradable nonwoven fabric according to any one of [1] to [10] above.

[16] A light packaging material which includes a biodegradable nonwoven fabric according to any one of [1] to [10] above.

Another aspect of the invention is as follows.

<1> A biodegradable nonwoven fabric composed of fibers that include a biodegradable thermoplastic resin, and having embossed sections and non-embossed sections, wherein the embossed section thickness index, as the thickness of the embossed sections divided by the square root of the basis weight, is 2.75 to 4.36 mm/(g/m$^2$)$^{0.5}$.

<2> The biodegradable nonwoven fabric according to <1> above, wherein the embossed section thickness index is 2.75 to 4.05 mm/(g/m$^2$)$^{0.5}$.

<3> The biodegradable nonwoven fabric according to <1> or <2> above, wherein the glass transition temperature is 25°C or lower, as measured with temperature increase at a rate of 10°C/min using a differential scanning calorimeter.

<4> The biodegradable nonwoven fabric according to any one of <1> to <3> above, wherein the biodegradable thermoplastic resin is one or more selected from the group consisting of polybutylene succinate adipate, polybutylene adipate terephthalate, polyhydroxy butyrate valerate and polyhydroxy butyrate butyrate.

<5> The biodegradable nonwoven fabric according to <4> above, wherein the biodegradable thermoplastic resin is polybutylene adipate terephthalate.

<6> The biodegradable nonwoven fabric according to any one of <1> to <5> above, wherein based on polarized Raman spectroscopy of the fibers forming the biodegradable nonwoven fabric, the value I∥/I⊥ of the ratio of the peak intensity I∥ at 1612 cm$^{-1}$ in the Raman spectrum measured with polarized light parallel to the fiber axes with respect to the peak intensity I⊥ at 1612 cm$^{-1}$ in the Raman spectrum measured with polarized light perpendicular to the fiber axes is higher than 1.08 and 2.9 or lower.

<7> The biodegradable nonwoven fabric according to any one of <1> to <6> above, which is for thermoforming.

<8> A method for producing a molded article, which includes a step of thermoforming a biodegradable nonwoven fabric according to any one of <1> to <7> above.

<9> The method according to <8> above, wherein the molded article is a food filter.

<10> The method according to <9> above, wherein the molded article is a coffee filter or tea bag filter.

<11> The method according to <8> above, wherein the molded article is a mask.

<12> The method according to <8> above, wherein the molded article is an agricultural material.

[ADVANTAGEOUS EFFECTS OF INVENTION]

The biodegradable nonwoven fabric according to one aspect of the invention is biodegradable while also having a very excellent texture.

The biodegradable nonwoven fabric according to another aspect of the invention is biodegradable, with satisfactory formability, and with reduced napping of embossed sections during molding.

DESCRIPTION OF EMBODIMENTS

An embodiment of the invention will now be described in detail.

A first embodiment of the invention is a biodegradable nonwoven fabric composed of fibers that include a biodegradable thermoplastic resin, wherein the shear viscosity is higher than 0 Pa·s and no greater than -41.4 × ln(x) + 500.84 Pa·s at 230°C, assuming a shear rate "x" (where x is 20/s to 10,000/s).

Another embodiment of the invention is a biodegradable nonwoven fabric composed of fibers that include a biodegradable thermoplastic resin, and having embossed sections and non-embossed sections, wherein the embossed section thickness index, as the thickness of the embossed sections divided by the square root of the basis weight, is 2.75 to 4.36 $mm/(g/m^2)^{0.5}$.

The biodegradable nonwoven fabric of this embodiment is made of fibers that include a biodegradable thermoplastic resin. Biodegradable thermoplastic resins include polyhydroxy butyrate valerate, polyhydroxy butyrate butyrate, nylon 4, polyglycolic acid, polycaprolactone, polybutylene succinate, polybutylene succinate adipate, polybutylene terephthalate succinate, polybutylene succinate carbonate, polybutylene adipate terephthalate, polyethylene succinate, polyethylene terephthalate succinate and polyvinyl alcohol. Polyhydroxy butyrate valerate, polyhydroxy butyrate butyrate and polybutylene adipate terephthalate are preferred from the viewpoint of satisfactory biodegradability and texture. Polycaprolactone, nylon 4, polybutylene succinate adipate and polybutylene adipate terephthalate are preferred from the viewpoint of more easily exhibiting home compostability and soil compostability, while polyhydroxy butyrate valerate, polycaprolactone and nylon 4 are preferred from the viewpoint of more easily exhibiting marine compostability. Home compostability, soil compostability and marine compostability will be explained in detail below. Polycaprolactone and polybutylene succinate adipate, which can be melted by the quantity of heat in hot water, are preferred from the viewpoint of easier separation as part of the final product.

The method for producing the biodegradable nonwoven fabric of the embodiment is not particularly restricted, and a publicly known spunbond method, melt blowing method, airlaid method, carding method or papermaking method may be used. The biodegradable nonwoven fabric of the embodiment is preferably integrated by bonding, the method of bonding being optionally embossing, thermal bonding, columnar flow entanglement, mechanical tangling or needle punching. A long filament nonwoven fabric is preferred, preferably being produced by a spunbond method, to allow more efficient production and to help inhibit napping after molding.

When a spunbond method is used, the resin is hot melted and discharged from a spinning nozzle, and the resulting spun yarn is cooled using a publicly known cooling device and subjected to tow thinning with a suction device such as an air sucker. The yarn group discharged from the suction device is then opened and accumulated on a conveyor to form a web. A partial thermocompression bonding apparatus such as a heated embossing roll is then used for partial thermocompression bonding of the web formed on the conveyor, to obtain a spunbond nonwoven fabric. A nonwoven fabric obtained by a spunbond method has high fabric strength and no loss of the staple fibers due to breakage during bonding, while also having low-cost productivity.

The biodegradable nonwoven fabric of the embodiment may have a layered structure, such as SS, SMS, SMMS or SMSM, for example. Here, "S" represents a long filament nonwoven fabric obtained by a spunbond method, and "M" represents a superfine nonwoven fabric obtained by a melt-blown method. The biodegradable nonwoven fabric may also be used as a base material for layering of a staple fiber nonwoven fabric layer.

The shapes of the fibers forming the biodegradable nonwoven fabric of the embodiment are not restricted, and the fibers may have cross-sections that are round, flat or non-regular such as C-shaped, Y-shaped or V-shaped, with round cross-sections being preferred, and with a sea-island structure, sheath-core structure or split fiber structure being more preferred.

The fibers forming the biodegradable nonwoven fabric of the embodiment may comprise one or more components such as another resin, or a flame retardant, inorganic filler, flexibilizer, plasticizer, pigment or antistatic agent, depending on the purpose.

The fibers in the biodegradable nonwoven fabric of the embodiment may include a thermoplastic resin as an accessory component (hereunder also referred to as "accessory component resin"), other than the biodegradable thermoplastic resin. The accessory component resin content is preferably 0.5 mass% to 50 mass%, more preferably 2 to 50 mass%, even more preferably 5 to 30 mass% and most preferably 5 to 25 mass%, where the total mass of the nonwoven fabric is 100 mass%. Addition in an amount of 0.5 mass% or greater will allow the crystallinity of the nonwoven fabric to be controlled, thus facilitating control of the texture of the nonwoven fabric.

Accessory component resins include polyhydroxy butyrate valerate, polyhydroxy butyrate butyrate, nylon 4, polycaprolactone, polybutylene succinate, polybutylene succinate adipate, polybutylene terephthalate succinate, polybutylene succinate carbonate, polybutylene adipate terephthalate, polyethylene succinate, polyethylene terephthalate succinate, polyglycolic acid, polyvinyl alcohol, polypropylene, polyethylene terephthalate and polyethylene. Polyhydroxy butyrate valerate, polyhydroxy butyrate butyrate and polybutylene adipate terephthalate are preferred from the viewpoint of satisfactory biodegradability and texture, while polycaprolactone and polybutylene succinate adipate, which can be melted by the quantity of heat in hot water, are preferred from the viewpoint of easier separation as part of the final product. The accessory component resin may also include a non-biodegradable resin such as polypropylene, polyethylene terephthalate or polyethylene, but the non-biodegradable resin content is preferably lower than 10 mass% from the viewpoint of satisfying the different biodegradable properties described below.

Using sea-island fibers with a biodegradable thermoplastic resin as the sea component and an accessory component resin as the island component, for the main component of the fibers composing the biodegradable nonwoven fabric of the embodiment, will allow control of the crystallinity with a lower addition rate and will thus facilitate control of the nonwoven fabric texture.

In a spunbond method it is common to use a high-speed airflow traction device with an air jet, allowing the traction to be adjusted by the volume of air introduced into the traction device. The "traction" was measured by loading two lines (fishing lines), each with a diameter of 0.235 mm and having the same length as the full length of the traction device (for the present purpose, a "Ginrin (#2/natural/50 m single wound" nylon line by Toray Co., Ltd. was used), into the traction device and measuring the stress with a spring connected to the line, dividing by the loaded line length to calculate the traction (mN/m). The traction is preferably 27 to 125 mN/m, more preferably 38 to 75 mN/m and most preferably 46 to 63 mN/m. Traction of 125 mN/m or lower can adequately inhibit yarn breakage during spinning while reducing excessively oriented crystallization so as to limit excessive increase in the birefringence Δn after thermocompression bonding or fixed length heat treatment. Traction of 27 mN/m or greater allows oriented crystallization to proceed in a suitable manner for thermocompression bonding, to obtain a nonwoven fabric with sufficient strength.

The method of thermocompression bonding during production of the biodegradable nonwoven fabric of the embodiment is not restricted, and it may be thermocompression bonding using a combination of an embossing roll having a concavoconvex pattern on the surface and a flat roll without concavoconvexities, or thermocompression bonding using a pair of embossing rolls having concavoconvex patterns on both surfaces. The material of the roll surface is likewise not limited and may be metal, rubber or resin. When an embossing roll having a concavoconvex pattern on the surface is used, thermocompression bonding may be carried out with a roll temperature of preferably a temperature of at least 10°C lower than the melting point of the resin of the nonwoven fabric, a linear pressure of preferably 5 to 100 N/mm and more preferably 20 to 80 N/mm, and a contact bonding area ratio of preferably 3 to 50% and more preferably 6 to 40%. Thermocompression bonding within a suitable range can achieve both texture and contact bonding for the nonwoven fabric.

Fixed length heat treatment may be carried out for production of the biodegradable nonwoven fabric of the embodiment, regardless of whether a thermocompression bonding step is carried out. Fixed length heat treatment is heat treatment in which the dimensions of the nonwoven fabric in the lengthwise direction and widthwise direction are restricted so that they do not vary during heat treatment. A nonwoven fabric obtained by fixed length heat treatment after the nonwoven fabric web has been subjected to thermocompression bonding immediately after spinning has satisfactory surface smoothness and excellent stretchability in hot environments, and is therefore resistant to tearing during molding and can easily yield a molded article with the proper form. The method for fixed length heat treatment may be a common method such as hot air drying, pin tenter drying, hot plate treatment, calendering, felt calendering, air-through processing or hot pressing. The temperature range for fixed length heat setting may be a temperature that allows the fibers of the nonwoven fabric to be suitably bonded without adhesion of the nonwoven fabric resin onto the apparatus.

A method other than thermocompression bonding may also be used for bonding during production of the biodegradable nonwoven fabric of the embodiment. Hydroentangling or needle punching, for example, allow bonding of the nonwoven fabric without heat, thus helping to improve the texture of the nonwoven fabric. Such bonding methods may also be carried out after embossing.

With specific aging conditions, the biodegradable nonwoven fabric of the embodiment can have increased crystallinity and inhibited heat shrinkage of the nonwoven fabric. Specifically, the effect described above can be obtained more easily with aging conditions by storage for 10 days or longer in a 40°C atmosphere.

The biodegradable nonwoven fabric of the embodiment may also comprise a surfactant for antistatic and water absorption properties. A nonionic, anionic or cationic surfactant may be used, which may be a carboxylic acid-type, sulfonic acid-type, sulfuric acid ester-type, phosphoric acid ester-type, ester-type, ether-type, ester/ether-type, alkanolamide-type, alkylamine-type or quaternary ammonium-type surfactant, and preferably an ester-type surfactant, with sorbitan fatty acid esters, polyglycerin fatty acid esters and polyoxyalkylene alkyl esters being especially preferred for ester types. Such surfactants may be used alone or in combinations.

The adhesion rate of the surfactant is preferably 0.1 wt% or greater and more preferably 2.0 wt% or lower with respect to the nonwoven fabric mass, from the viewpoint of exhibiting sufficient antistatic and water absorption properties. A surfactant adhesion rate of 0.1 wt% to 2.0 wt% will result in adequate performance.

The coating method for the surfactant may employ an existing type of coating system such as a kiss coating system, gravure system or spray system, selected as appropriate for the purpose. Specifically, a transfer system such as a kiss coating system or gravure system is preferred when performance on only one side is desired, while coating by a spray system is preferred when similar performance is desired on both sides.

The basis weight of the biodegradable nonwoven fabric of the embodiment is preferably 10 $g/m^2$ to 450 $g/m^2$, more preferably 10 to 250 $g/m^2$ and even more preferably 12 to 100 $g/m^2$. A basis weight of 10 $g/m^2$ or greater will provide sufficient strength, while 450 $g/m^2$ or lower will ensure adequate texture.

With the biodegradable nonwoven fabric of the embodiment, the shear viscosity of the nonwoven fabric is higher than 0 Pa·s and -41.4 × ln(x) + 500.84 Pa·s or lower, more preferably -41.4 × ln(x) + 500.84 Pa·s or lower, even more preferably -36.8 × ln(x) + 366.03 Pa·s or lower and most preferably -25.46 × ln(x) + 257.11 or lower, and preferably -5.45 × ln(x) + 50.759 Pa·s or higher, preferably -10.17 × ln(x) + 98.781 or higher and most preferably -10.95 × ln(x) + 109.1 or higher (where ln(x) is the natural logarithm, and the "×" preceding the natural logarithm is added for clarity), at 230°C, assuming a shear rate "x" (where x is 20/s to 10,000/s). A shear viscosity of -41.4 × ln(x) + 500.84 Pa·s or lower will result in excellent texture. A shear viscosity of -5.45 × ln(x) + 50.759 Pa·s or higher, on the other hand, will tend to result in a nonwoven fabric with satisfactory uniformity of dispersion. Satisfactory uniformity of dispersion of the nonwoven fabric will more easily yield a nonwoven fabric with satisfactory texture regardless of the sampling site, while exhibiting excellent filter performance as required for a food filter or mask, and excellent powder leak resistance as required for a food filter such as a coffee filter or tea bag filter.

The shear viscosity of the biodegradable nonwoven fabric of the embodiment can be controlled by the molecular structure, molecular weight and viscosity of the resin, or the extrusion temperature and residence time during production of the nonwoven fabric, additives such as water, and the crystallinity or orientation of the nonwoven fabric. Polybutylene terephthalate adipate and polybutylene succinate adipate are preferably used as resin types. When the nonwoven fabric is produced by a spunbond method, for example, the shear viscosity of the final obtained nonwoven fabric will usually be about 1 to 30% lower than the shear viscosity of the starting resin, although this will depend on the thermal decomposition property of the resin, the water content of the resin, the thermal history up to discharge, and the shear rate.

The glass transition temperature of the biodegradable nonwoven fabric of the embodiment is preferably 25°C or lower, more preferably 10°C or lower and even more preferably 0°C or lower. If the glass transition temperature is 25°C or lower this will increase the mobility of the molecular chains in a room temperature environment, and improve the texture.

The biodegradable nonwoven fabric of the invention is biodegradable while exhibiting excellent texture, and it can therefore be suitably used in a wide variety of fields including medical and hygiene materials, industrial materials, vehicle interior and exterior materials, soundproof materials, sound-absorbing materials, part transport trays, fruit and vegetable trays, food containers, agricultural materials such as seedling pods and mulch sheets, light packaging materials and filters. It is particularly suited for food filters such as coffee filters or tea bag filters, diapers, masks, agricultural materials and light packaging materials.

When the biodegradable nonwoven fabric of the invention is made of a biodegradable thermoplastic resin having a melting point of 100°C or lower, the property of melting or contracting by hot water can be more easily utilized to facilitate separation and recovery of the nonwoven fabric from products that are composites of multiple materials, such as diapers, for example.

A biodegradable nonwoven fabric suitable for thermoforming will now be described as one embodiment of the invention.

The glass transition temperature of the biodegradable nonwoven fabric of the embodiment is preferably 25°C or lower, more preferably 10°C or lower and even more preferably 0°C or lower. If the glass transition temperature is 25°C or lower, then embossing at low temperature and high pressure in the thermocompression bonding step will result in more residual amorphous sections during thermoforming while satisfactorily causing contact bonding between the fibers at the embossed sections, thereby helping to both reduce napping and provide satisfactory formability. From the viewpoint of limiting the glass transition temperature to within the aforementioned range, the biodegradable nonwoven fabric of the embodiment preferably includes a biodegradable thermoplastic resin such as polyhydroxy butyrate valerate, polyhydroxy butyrate butyrate, polybutylene adipate terephthalate, polycaprolactone or polybutylene succinate adipate.

If the glass transition temperature of the biodegradable nonwoven fabric of the embodiment is 25°C or lower it will be difficult to immobilize the structure after thermoforming, and shrinkage immediately after release of the thermoforming die (shrink back) will tend to occur. Such shrinkage can be controlled by providing a shape retention step for rapid cooling and solidification of the molded article after molding, or by optimizing the crystal structure of the nonwoven fabric, or by adjusting the spinning speed during the spinning step or the conditions during thermocompression bonding or fixed length heat treatment. For thermocompression bonding by embossing, such shrinkage can also be controlled by contact bonding together the fibers of the embossed sections at low temperature and high pressure, with as little heating as possible, which makes it possible to achieve both thermoformability and reduced napping. When an embossing roll having a concavoconvex pattern on the surface is used for embossing, thermocompression bonding is preferably carried out with a roll temperature of preferably at least 10°C lower and more preferably at least 40°C lower than the melting point of the resin of the nonwoven fabric, and a linear pressure of preferably 5 to 100 N/mm and more preferably 20 to 80 N/mm.

When the biodegradable nonwoven fabric of the embodiment has embossed sections and non-embossed sections, the embossed section thickness index $(mm/(g/m^2)^{0.5})$, as the thickness of the embossed sections divided by the square root of the basis weight of the biodegradable nonwoven fabric, is greater than 0, preferably 2.75 or greater or 3.08 or greater, and preferably 4.36 or lower, 4.05 or lower, 3.63 or lower, 3.51 or lower, 3.43 or lower or 3.24 or lower. If the embossed section thickness index is 2.75 or greater, then the embossed sections will be less likely to tear and the formability will be improved, while if it is 4.36 or lower, contact bonding between the fibers of the embossed sections will be stronger, resulting in reduced napping. When the glass transition temperature is 25°C or lower, a particularly high effect is obtained with an embossed section thickness index of 2.75 to 4.36.

With polarized Raman spectroscopy of the fibers composing the biodegradable nonwoven fabric of the embodiment, the value $I\|/I\perp$ of the ratio of the peak intensity $I\|$ at 1612 $cm^{-1}$ in the Raman spectrum measured with polarized light parallel to the fiber axes with respect to the peak intensity $I\perp$ at 1612 $cm^{-1}$ in the Raman spectrum measured with polarized light perpendicular to the fiber axes is preferably 2.9 or lower, more preferably 2.7 or lower and even more preferably 1.2 to 2.5. If $I\|/I\perp$ is 2.9 or lower, excessive orientation will be prevented and extendability of the molecular chains during molding will be maintained, thereby facilitating moldability. The value of $I\|/I\perp$ is preferably lower from the viewpoint of retaining pleats, but for biodegradable fibers it will generally be higher than 1.08. The method for measuring $I\|/I\perp$ will be described in detail below.

The biodegradable nonwoven fabric of the embodiment preferably has a yield point in the displacement zone of 0 to 40 mm in the SS curve obtained by stretching the biodegradable nonwoven fabric at 70°C, and approximation of the SS curve in the same zone is preferably $y = -2.6 \times 10^{-6} \times x^4 + 0.0003x^3 - 0.0112x^2 + 0.2474x - 0.0059$ to $y = -3.5 \times 10^{-5} \times x^4 + 0.0032x^3 - 0.1146x^2 + 2.1105x + 0.3381$, more preferably $y = -2.6 \times 10^{-6} \times x^4 + 0.0003x^3 - 0.0112x^2 + 0.2474x - 0.0059$ to $y = -2.9 \times 10^{-5} \times x^4 + 0.0026x^3 - 0.0947x^2 + 1.7434x + 0.2793$, even more preferably $y = -2.6 \times 10^{-6} \times x^4 + 0.0003x^3 - 0.0112x^2 + 0.2474x - 0.0059$ to $y = -8 \times 10^{-6} \times x^4 + 0.0007x^3 - 0.0282x^2 + 0.8017x + 0.2779$, and most preferably $y = -5 \times 10^{-6} \times x^4 + 0.0006x^3 - 0.022x^2 + 0.4841x - 0.0115$ to $y = -7 \times 10^{-6} \times x^4 + 0.0006x^3 - 0.0256x^2 + 0.7511x + 0.211$. If there is a yield point in the displacement zone of 0 to 40 mm at 70°C and approximation of the SS curve in that zone is $y = -2.6E \times 10^{-6} \times x^4 + 0.0003x^3 - 0.0112x^2 + 0.2474x - 0.0059$ or greater, then tearing will be unlikely to occur during molding, and if $y = -3.5 \times 10^{-5} \times x^4 + 0.0032x^3 - 0.1146x^2 + 2.1105x + 0.3381$ or lower, then it will be easier to reduce shrinkage immediately after molding.

The biodegradable nonwoven fabric of the embodiment may be subjected to thermoforming to produce a molded article. There is no particular restriction on the shape of the molded article, which may be selected from among semicircular, circular columnar, elliptical, triangular or rectangular, for example, depending on the purpose of use. If it is desired to obtain a molded article with a larger area (surface area) than the area of the nonwoven fabric before molding, then the molding die may be appropriately selected so that the area of the nonwoven fabric is larger before and after molding.

The thermoforming method for the biodegradable nonwoven fabric of the embodiment is not particularly restricted so long as it includes a thermoforming step, and it may also include a preheating step before thermoforming, or a shape retention step to maintain the volume after thermoforming. If a preheating step is included before thermoforming it will be possible to control the temperature of the nonwoven fabric immediately before molding and to adjust the property values of the nonwoven fabric, such as the storage modulus, to values suited for molding. The temperature range for the nonwoven fabric immediately prior to molding is preferably 30 to 70°C, more preferably 40 to 60°C and even more preferably 40 to 50°C. If the nonwoven fabric temperature immediately prior to molding is 30°C or higher, the nonwoven fabric will be sufficiently soft to result in a satisfactory follow property for the molding die, while being resistant to molding defects such as tearing or molding marks. If the temperature immediately prior to molding is 70°C or lower, the nonwoven fabric will be easier to mold without heat shrinkage. The thermoforming temperature range is preferably 30 to 150°C, more preferably 50 to 90°C and even more preferably 60 to 80°C. A thermoforming temperature of 30°C or higher will allow adequate stretching of the nonwoven fabric.

The biodegradable nonwoven fabric for thermoforming of the embodiment is suitable as a food filter such as a coffee filter or tea bag filter, as a mask, or as an agricultural material.

EXAMPLES

The present invention will now be explained in greater detail by examples.

The measuring methods and evaluation methods used in the Examples and Comparative Examples will be explained first.

(1) Basis weight (g/m$^2$)

Nonwoven fabric samples were cut out to a total area of 1500 cm$^2$ (three with 20 cm width $\times$ 25 cm length), according to JIS L-1913, and measured in terms of the mass per unit.

(2) Mean fiber size ($\mu$m)

A VHX-700F microscope by Keyence Corp. was used to take a 500x-magnified photograph, and the average value for 10 fibers within the focus of the observation field was determined.

(3) Bulk density (g/cm$^3$)

A thickness gauge by Mitsutoyo Co. was used to measure the thickness (mm) of the nonwoven fabric sample under a 100 g load, and calculation was performed by the following formula:

$$\text{Bulk density (g/cm}^3) = \text{Basis weight (g/m}^2)/\text{thickness (mm)}/1000.$$

(4) Glass transition temperature (°C)

The glass transition point (Tg) was the starting temperature of secondary transition for the heat quantity in the secondary transition region corresponding to the transition region from a glassy state to a rubbery state, as detected by temperature increase using a DSC6000 differential scanning calorimeter by PerkinElmer Col, heating approximately 5.0 mg of nonwoven fabric in a nitrogen atmosphere from -50°C to a temperature of near melting point (Tm) + 60°C, at a temperature-elevating rate of 10°C/min.

(5) Melting point (°C)

The melting point was the apex of the melting peak, as the endothermic peak detected by temperature increase using a DSC6000 differential scanning calorimeter by PerkinElmer Col, heating 5.0 mg of nonwoven fabric in a nitrogen atmosphere from -50°C to a temperature of near melting point (Tm) + 60°C, at a temperature-elevating rate of 10°C/min. Multiple melting peaks may be observed depending on the type and number of resins composing the nonwoven fabric.

(6) Shear viscosity (Pa·s)

A molten nonwoven fabric sample was extruded at a shear rate ($\gamma$) of 20/s, 100/s, 500/s, 1000/s, 2000/s and 10,000/s, with a program of changing the volume flow rate (Q) in a stepwise manner of 0.118 cm$^3$/min, 0.588 cm$^3$/min, 2.946 cm$^3$/min, 5.885 cm$^3$/min, 11.778 cm$^3$/min and 58.904 cm$^3$/min from an orifice with a diameter (D) of 0.1 cm and a capillary length (L) of 1.6 cm connected at the tip of a barrel with a radius of 1.5 cm, using an RH7-D capillary rheometer by Rosand Co. at 230°C, and the pressure (P: Pa) in the die was measured. The shear viscosity ($\eta$:Pa·s) was calculated by the following formula:

[Formula 1]

$$\eta = \frac{P\,D}{4\,L\,\gamma}$$

The measurement was performed N = 3 times, and the average value was rounded to three significant digits. The nonwoven fabric sample was pulverized with a commercially available mixer and filled into a barrel within 1 minute, with measurement beginning 30 seconds after filling.

(7) Biodegradability

The following four biodegradable tests were carried out, with the sample judged to be biodegradable if it passed at least one test.

<Industrial compostability>

A biodegradable test was conducted at 58 $\pm$2°C using organic components from municipal solid waste as compost according to ISO 14855-1 (58 $\pm$2°C) and JIS K 6953-1, under conditions simulating industrial composting (composting factory), and the biodegradability was determined from the amount of carbon dioxide generated, as a ratio with the theoretical carbon dioxide generation, and was evaluated as either acceptable (+), for ≥90% biodegradability within 6 months, or unacceptable (-).

<Home compostability>

A biodegradable test was conducted at 28 $\pm$2°C according to ISO 14855-1 (28 $\pm$2°C) and JIS K 6953-1, and the biodegradability was determined from the amount of carbon dioxide generated, as a ratio with the theoretical carbon dioxide generation, and was evaluated as either acceptable (+), for ≥90% biodegradability within 6 months, or unacceptable (-).

<Soil compostability>

A biodegradable test was conducted at 25 $\pm$2°C according to ISO 17556 (25 $\pm$2°C), and the biodegradability was determined from the amount of carbon dioxide generated, as a ratio with the theoretical carbon dioxide generation, and was evaluated as either acceptable (+), for ≥90% biodegradability within 6 months, or unacceptable (-).

<Marine compostability>

A biodegradable test was conducted at 30 $\pm$1°C according to ASTM D6691 (30 $\pm$1°C), and the biodegradability was determined from the amount of carbon dioxide generated, as a ratio with the theoretical carbon dioxide generation, and was evaluated as either acceptable (+), for ≥90% biodegradability within 6 months, or unacceptable (-).

(8) Texture

A 10 cm-square piece of nonwoven fabric was sampled and evaluated by 10 randomly selected persons based on the sensation when touched by hand for 30 seconds, assigning points on the following scale and averaging.

[Evaluation scale]

5: Excellent texture
4: Satisfactory texture
3: Somewhat satisfactory texture
2: Poor texture

1: Very poor texture

(9) Uniformity of dispersion

A 1 m-square piece of nonwoven fabric was sampled and evaluated by 10 randomly selected persons based on the uniformity of dispersion with visual observation for 30 seconds, assigning points on the following scale and averaging.

[Evaluation scale]

4: Excellent uniformity of dispersion.
3: Satisfactory uniformity of dispersion.
2: Somewhat satisfactory uniformity of dispersion.
1: Poor uniformity of dispersion.

[Example 1]

Polybutylene adipate terephthalate (abbreviated as PBAT in Table 1 and Table 3) was melted and kneaded with a single-screw extruder, and extruded by a spunbond method at a spinning temperature of 210°C at a throughput of 0.9 g/min/hole, towing a filament group with an air jet in a high-speed airflow traction device with a traction force of 93 mN/m, and depositing them on a moving collection surface to prepare a biodegradable long fiber web (circular cross-section).

Next, a pair of embossing rolls, comprising a roll with a concavoconvex pattern on the surface and a roll having a smooth surface, were used for thermocompression bonding under conditions with a contact bonding area ratio of 11%, a temperature of 95°C on both rolls, and a roll linear pressure of 20 N/mm, to obtain a biodegradable nonwoven fabric with a basis weight of 20 g/m$^2$.

[Examples 2 to 6 and 14 to 18]

A biodegradable nonwoven fabric was produced in the same manner as Example 1, except that polybutylene adipate terephthalate with a different shear viscosity was used.

[Examples 7 to 13]

Biodegradable nonwoven fabrics were produced in the same manner as Example 6, except that the line speed was changed for the basis weights listed in Tables 1 and 2.

[Example 19]

A biodegradable nonwoven fabric was produced in the same manner as Example 6, except that extrusion was by a spunbond method at a spinning temperature of 220°C, and the extruded filament was stretched within a suction zone using suction force on a moving collection surface, after which it was collected through a diffuser onto the moving collection surface.

[Example 20]

Polybutylene succinate adipate (abbreviated as PBSA in Table 3) was melted and kneaded with a single-screw extruder, and extruded by a spunbond method with a throughput of 0.9 g/min·hole, a spinning temperature of 190°C, a traction of 93 mN/m, and direction of the filament group toward a moving collection surface, to prepare a biodegradable long fiber web (circular cross-section). Next, a pair of embossing rolls, comprising a roll with a concavoconvex pattern on the surface and a roll having a smooth surface, were used for thermocompression bonding under conditions with a contact bonding area ratio of 11%, a temperature of 65°C on both rolls, and a roll linear pressure of 20 N/mm, to obtain a biodegradable nonwoven fabric with a basis weight of 20 g/m$^2$.

[Examples 21 and 22]

A biodegradable nonwoven fabric was produced in the same manner as Example 20, except that polybutylene succinate adipate with a different shear viscosity was used.

[Example 23]

Polyglycolic acid (abbreviated as PGA in Table 3) was melted and kneaded with a single-screw extruder, and extruded by a spunbond method with a throughput of 0.9 g/min·hole, a spinning temperature of 260°C, a traction of 93 mN/m, and direction of the filament group toward a moving collection surface, to prepare a biodegradable long fiber web (circular cross-section). Next, a pair of embossing rolls, comprising a roll with a concavoconvex pattern on the surface and a roll having a smooth surface, were used for thermocompression bonding under conditions with a contact bonding area ratio of 11%, a temperature of 190°C on both rolls, and a roll linear pressure of 20 N/mm, to obtain a biodegradable nonwoven fabric with a basis weight of 20 g/m$^2$.

[Example 24]

Polybutylene succinate (abbreviated as PBS in Table 3) was melted and kneaded with a single-screw extruder, and extruded by a spunbond method with a throughput of 0.9 g/min·hole, a spinning temperature of 210°C, a traction of 93 mN/m, and direction of the filament group toward a moving collection surface, to prepare a biodegradable long fiber web (circular cross-section). Next, a pair of embossing rolls, comprising a roll with a concavoconvex pattern on the surface and a roll having a smooth surface, were used for thermocompression bonding under conditions with a contact bonding area ratio of 11%, a temperature of 95°C on both rolls, and a roll linear pressure of 20 N/mm, to obtain a biodegradable nonwoven fabric with a basis weight of 20 g/m$^2$.

[Example 25]

Polyamide 4 (abbreviated as PA4 in Table 3) was melted and kneaded with a single-screw extruder, and extruded by a spunbond method with a throughput of 0.9 g/min·hole, a spinning temperature of 210°C, a traction of 93 mN/m, and direction of the filament group toward a moving collection surface, to prepare a biodegradable long fiber web (circular cross-section). Next, a pair of embossing rolls, comprising a roll with a concavoconvex pattern on the surface and a roll having a smooth surface, were used for thermocompression bonding under conditions with a contact bonding area ratio of 11%, a temperature of 185°C on both rolls, and a roll linear pressure of 20 N/mm, to obtain a biodegradable nonwoven fabric with a basis weight of 20 g/m$^2$.

[Example 26]

Polycaprolactone (abbreviated as PCL in Table 3) was melted and kneaded with a single-screw extruder, and extruded by a spunbond method with a throughput of 0.9 g/min·hole, a spinning temperature of 100°C, a traction of 93 mN/m, and direction of the filament group toward a moving collection surface, to prepare a biodegradable long fiber web (circular cross-section). Next, a pair of embossing rolls, comprising a roll with a concavoconvex pattern on the surface and a roll having a smooth surface, were used for thermocompression bonding under conditions with a contact bonding area ratio of 11%, a temperature of 45°C on both rolls, and a roll linear pressure of 20 N/mm, to obtain a biodegradable nonwoven fabric with a basis weight of 20 g/m$^2$.

[Comparative Examples 1 and 2]

A biodegradable nonwoven fabric was produced in the same manner as Example 1, except that polybutylene adipate terephthalate with a different shear viscosity was used.

[Comparative Example 3]

Polyethylene terephthalate (abbreviated as PET in Table 4) was melted and kneaded with a single-screw extruder, and extruded by a spunbond method with a throughput of 0.9 g/min·hole, a spinning temperature of 290°C, a traction of 93 mN/m, and direction of the filament group toward a moving collection surface, to prepare a biodegradable long fiber web (circular cross-section). Next, a pair of embossing rolls, comprising a roll with a concavoconvex pattern on the surface and a roll having a smooth surface, were used for thermocompression bonding under conditions with a contact bonding area ratio of 11%, a temperature of 220°C on both rolls, and a roll linear pressure of 20 N/mm, to obtain a nonwoven fabric with a basis weight of 20 g/m$^2$.

[Comparative Example 4]

Polypropylene (abbreviated as PP in Table 4) was melted and kneaded with a single-screw extruder, and extruded by a spunbond method with a throughput of 0.9 g/min·hole, a spinning temperature of 230°C, a traction of 93 mN/m, and direction of the filament group toward a moving collection surface, to prepare a biodegradable long fiber web (circular cross-section). Next, a pair of embossing rolls, comprising a roll with a concavoconvex pattern on the surface and a roll having a smooth surface, were used for thermocompression bonding under conditions with a contact bonding area ratio of 11%, a temperature of 135°C on both rolls, and a roll linear pressure of 20 N/mm, to obtain a nonwoven fabric with a basis weight of 20 g/m$^2$.

Tables 1 to 4 show the evaluation results for the physical properties of the nonwoven fabrics of Examples 1 to 26 and Comparative Examples 1 to 4.

[Table 1]

Table 1

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Main component resin | Type | - | PBAT | PBAT | PBAT | PBAT | PBAT | PBAT | PBAT | PBAT | PBAT | PBAT |
| | Content | mass% | 100 | 100 | 100 | 100 | 100 | 100 | 100 | 100 | 100 | 100 |
| | Glass transition temperature (Tg) | °C | -30 | -30 | -30 | -30 | -30 | -30 | -30 | -30 | -30 | -30 |
| | Melting point (Tm) | °C | 120 | 120 | 120 | 120 | 120 | 120 | 120 | 120 | 120 | 120 |
| Accessory component resin | Type | - | - | - | - | - | - | - | - | - | - | - |
| | Content | mass% | - | - | - | - | - | - | - | - | - | - |
| | Glass transition temperature (Tg) | °C | - | - | - | - | - | - | - | - | - | - |
| | Melting point (Tm) | °C | - | - | - | - | - | - | - | - | - | - |
| Basis weight | | g/m² | 20 | 20 | 20 | 20 | 20 | 20 | 10 | 12 | 40 | 70 |
| Shear viscosity at 230°C, shear rate x | x = 20/s | Pa·s | 377 | 321 | 256 | 181 | 150 | 134 | 134 | 134 | 134 | 134 |
| | x = 100/s | Pa·s | 310 | 295 | 197 | 140 | 102 | 84.0 | 84.0 | 84.0 | 84.0 | 84.0 |
| | x = 500/s | Pa·s | 244 | 234 | 137 | 98.9 | 76.0 | 52.0 | 52.0 | 52.0 | 52.0 | 52.0 |
| | x = 1000/s | Pa·s | 215 | 143 | 112 | 81.2 | 53.0 | 35.0 | 35.0 | 35.0 | 35.0 | 35.0 |
| | x = 2000/s | Pa·s | 186 | 102 | 86.3 | 63.6 | 45.0 | 30.6 | 30.6 | 30.6 | 30.6 | 30.6 |
| | x = 10,000/s | Pa·s | 120 | 36.0 | 27.1 | 22.6 | 20.0 | 17.4 | 17.4 | 17.4 | 17.4 | 17.4 |
| Shear viscosity of ≤ -41.4ln(x) + 500.84 | | - | Y | Y | Y | Y | Y | Y | Y | Y | Y | Y |
| Shear viscosity of ≤ -36.8ln(x) + 366.03 | | - | N | N | Y | Y | Y | Y | Y | Y | Y | Y |
| Shear viscosity of ≤ -25.46ln(x) + 257.11 | | - | N | N | N | Y | Y | Y | Y | Y | Y | Y |

EP 4 397 798 A1

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Shear viscosity of $\geq$ -5.45ln(x) + 50.759 | - | Y | Y | Y | Y | Y | Y | Y | Y | Y | Y |
| Shear viscosity of $\geq$ -10.17ln(x) + 98.781 | - | Y | Y | Y | Y | Y | Y | Y | Y | Y | Y |
| Shear viscosity of $\geq$ -10.95ln(x) + 109.1 | - | Y | Y | Y | Y | Y | Y | Y | Y | Y | Y |
| Biodegradability | Industrial | - | Y | Y | Y | Y | Y | Y | Y | Y | Y | Y |
| | Home | - | Y | Y | Y | Y | Y | Y | Y | Y | Y | Y |
| | Soil | - | Y | Y | Y | Y | Y | Y | Y | Y | Y | Y |
| | Marine | - | N | N | N | N | N | N | N | N | N | N |
| Texture | | - | 3 | 3 | 4 | 5 | 5 | 5 | 5 | 5 | 5 | 5 |
| Uniformity of dispersion | | - | 4 | 4 | 4 | 4 | 4 | 4 | 4 | 4 | 4 | 4 |

[Table 2]

Table 2

| | | | Example 11 | Example 12 | Example 13 | Example 14 | Example 15 | Example 16 | Example 17 | Example 18 | Example 19 |
|---|---|---|---|---|---|---|---|---|---|---|---|
| Main component resin | Type | - | PBAT | PBAT | PBAT | PBAT | PBAT | PBAT | PBAT | PBAT | PBAT |
| | Content | mass% | 100 | 100 | 100 | 100 | 100 | 100 | 100 | 100 | 100 |
| | Glass transition temperature (Tg) | °C | -30 | -30 | -30 | -30 | -30 | -30 | -30 | -30 | -30 |
| | Melting point (Tm) | °C | 120 | 120 | 120 | 120 | 120 | 120 | 120 | 120 | 120 |
| Accessory component resin | Type | - | - | - | - | - | - | - | - | - | - |
| | Content | mass% | - | - | - | - | - | - | - | - | - |
| | Glass transition temperature (Tg) | °C | - | - | - | - | - | - | - | - | - |
| | Melting point (Tm) | °C | - | - | - | - | - | - | - | - | - |
| Basis weight | | g/m$^2$ | 100 | 250 | 450 | 20 | 20 | 20 | 20 | 20 | 20 |
| Shear viscosity at 230°C, shear rate x | x = 20/s | Pa·s | 134 | 134 | 134 | 102 | 86.0 | 76.3 | 68.3 | 34.4 | 134 |
| | x = 100/s | Pa·s | 84.0 | 84.0 | 84.0 | 73.0 | 63.0 | 58.7 | 51.9 | 25.7 | 84.0 |
| | x = 500/s | Pa·s | 52.0 | 52.0 | 52.0 | 47.0 | 43.0 | 41.1 | 35.6 | 16.9 | 52.0 |
| | x = 1000/s | Pa·s | 35.0 | 35.0 | 35.0 | 34.0 | 34.0 | 33.5 | 28.5 | 13.1 | 35.0 |
| | x = 2000/s | Pa·s | 30.6 | 30.6 | 30.6 | 29.0 | 27.0 | 25.9 | 21.5 | 9.33 | 30.6 |
| | x = 10,000/s | Pa·s | 17.4 | 17.4 | 17.4 | 13.0 | 10.0 | 8.25 | 5.11 | 0.563 | 17.4 |
| Shear viscosity of ≤ -41.4ln(x) + 500.84 | | - | Y | Y | Y | Y | Y | Y | Y | Y | Y |
| Shear viscosity of ≤ -36.8ln(x) + 366.03 | | - | Y | Y | Y | Y | Y | Y | Y | Y | Y |
| Shear viscosity of ≤ -25.46ln(x) + 257.11 | | - | Y | Y | Y | Y | Y | Y | Y | Y | Y |
| Shear viscosity of ≥ -5.45ln(x) + 50.759 | | - | Y | Y | Y | Y | Y | Y | Y | Y | Y |
| Shear viscosity of ≥ -10.17ln(x) + 98.781 | | - | Y | Y | Y | Y | Y | Y | Y | N | Y |
| Shear viscosity of ≥ -10.95ln(x) + 109.1 | | - | Y | Y | Y | Y | Y | Y | N | N | Y |

(continued)

| | | | Example 11 | Example 12 | Example 13 | Example 14 | Example 15 | Example 16 | Example 17 | Example 18 | Example 19 |
|---|---|---|---|---|---|---|---|---|---|---|---|---|
| Biodegradability | Industrial | - | Y | Y | Y | Y | Y | Y | Y | Y | Y |
| | Home | - | Y | Y | Y | Y | Y | Y | Y | Y | Y |
| | Soil | - | Y | Y | Y | Y | Y | Y | Y | Y | Y |
| | Marine | - | N | N | N | N | N | N | N | N | N |
| Texture | | - | 5 | 5 | 5 | 5 | 5 | 5 | 5 | 5 | 5 |
| Uniformity of dispersion | | - | 4 | 4 | 4 | 4 | 4 | 4 | 3 | 2 | 4 |

[Table 3]

[Table 3]

Table 3

| | | | Example 20 | Example 21 | Example 22 | Example 23 | Example 24 | Example 25 | Example 26 |
|---|---|---|---|---|---|---|---|---|---|
| Main component resin | Type | - | PBSA | PBSA | PBSA | PGA | PBS | PA4 | PCL |
| | Content | mass% | 100 | 100 | 100 | 100 | 100 | 100 | 100 |
| | Glass transition temperature (Tg) | °C | -35 | -35 | -35 | 36 | -32 | 40 | -60 |
| | Melting point (Tm) | °C | 94 | 94 | 94 | 200 | 110 | 180 | 60 |
| Accessory component resin | Type | - | - | - | - | - | - | - | - |
| | Content | mass% | - | - | - | - | - | - | - |
| | Glass transition temperature (Tg) | °C | - | - | - | - | - | - | - |
| | Melting point (Tm) | °C | - | - | - | - | - | - | - |
| Basis weight | | g/m$^2$ | 20 | 20 | 20 | 20 | 20 | 20 | 20 |
| Shear viscosity at 230°C, shear rate x | x = 20/s | Pa·s | 189 | 181 | 76.3 | 301 | 134 | 134 | 34.4 |
| | x = 100/s | Pa·s | 148 | 140 | 58.7 | 300 | 84.0 | 84.0 | 25.7 |
| | x = 500/s | Pa·s | 102 | 98.9 | 41.1 | 234 | 52.0 | 52.0 | 16.9 |
| | x = 1000/s | Pa·s | 82.0 | 81.2 | 33.5 | 85.0 | 35.0 | 35.0 | 13.1 |
| | x = 2000/s | Pa·s | 66.0 | 63.6 | 25.9 | 70.0 | 30.6 | 30.6 | 9.33 |
| | x = 10,000/s | Pa·s | 24.0 | 22.6 | 8.25 | 27.0 | 17.4 | 17.4 | 0.563 |
| Shear viscosity of $\leq$ -41.4ln(x) + 500.84 | | - | Y | Y | Y | Y | Y | Y | Y |
| Shear viscosity of $\leq$ -36.8ln(x) + 366.03 | | - | Y | Y | Y | N | Y | Y | Y |
| Shear viscosity of $\leq$ -25.46ln(x) + 257.11 | | - | N | Y | Y | N | Y | Y | Y |
| Shear viscosity of $\geq$ -5.45ln(x) + 50.759 | | - | Y | Y | Y | Y | Y | Y | Y |
| Shear viscosity of $\geq$ -10.17ln(x) + 98.781 | | - | Y | Y | Y | Y | Y | Y | N |
| Shear viscosity of $\geq$ -10.95ln(x) + 109.1 | | - | Y | Y | Y | Y | Y | Y | N |

(continued)

| | | | Example 20 | Example 21 | Example 22 | Example 23 | Example 24 | Example 25 | Example 26 |
|---|---|---|---|---|---|---|---|---|---|
| Biodegradability | Industrial | - | Y | Y | Y | Y | Y | Y | Y |
| | Home | - | Y | Y | Y | N | N | Y | Y |
| | Soil | - | Y | Y | Y | N | N | Y | Y |
| | Marine | - | N | N | N | N | N | Y | Y |
| Texture | | - | 3 | 4 | 4 | 3 | 4 | 4 | 4 |
| Uniformity of dispersion | | - | 4 | 4 | 4 | 4 | 4 | 4 | 1 |

[Table 4]

Table 4

| | | | Comp. Example 1 | Comp. Example 2 | Comp. Example 3 | Comp. Example 4 |
|---|---|---|---|---|---|---|
| Main component resin | Type | - | PBAT | PBAT | PET | PP |
| | Content | mass% | 100 | 100 | 100 | 100 |
| | Glass transition temperature (Tg) | °C | -30 | -30 | 70 | 0 |
| | Melting point (Tm) | °C | 120 | 120 | 250 | 160 |
| Accessory component resin | Type | - | - | - | - | - |
| | Content | mass% | - | - | - | - |
| | Glass transition temperature (Tg) | °C | - | - | - | - |
| | Melting point (Tm) | °C | - | - | - | - |
| Basis weight | | g/m² | 20 | 20 | 20 | 20 |
| Shear viscosity at 230°C, shear rate x | x = 20/s | Pa·s | 502 | 402 | - | 181 |
| | x = 100/s | Pa·s | 423 | 342 | - | 121 |
| | x = 500/s | Pa·s | 301 | 263 | - | 60.0 |
| | x = 1000/s | Pa·s | 293 | 230 | - | 26.0 |
| | x = 2000/s | Pa·s | 265 | 201 | - | 19.0 |
| | x = 10,000/s | Pa·s | 145 | 131 | - | 4.00 |
| Shear viscosity of ≤ -41.4ln(x) + 500.84 | | - | N | N | N | Y |
| Shear viscosity of ≤ -36.8ln(x) + 366.03 | | - | N | N | N | Y |
| Shear viscosity of ≤ -25.46ln(x) + 257.11 | | - | N | N | N | Y |
| Shear viscosity of ≥ -5.45ln(x) + 50.759 | | - | Y | Y | Y | Y |
| Shear viscosity of ≥ -10.17ln(x) + 98.781 | | - | Y | Y | Y | N |
| Shear viscosity of ≥ -10.95ln(x) + 109.1 | | - | Y | Y | Y | N |
| Biodegradability | Industrial | - | Y | Y | N | N |
| | Home | - | Y | Y | N | N |
| | Soil | - | Y | Y | N | N |
| | Marine | - | N | N | N | N |
| Texture | | - | 2 | 2 | 1 | 2 |
| Uniformity of dispersion | | - | 4 | 4 | 3 | 2 |

The present invention relating to a biodegradable nonwoven fabric for thermoforming will now be described in greater detail with working examples. In addition to the evaluation described above, each biodegradable nonwoven fabric for thermoforming was also evaluated as follows.

(10) Embossed section thickness index

The nonwoven fabric sample was freeze fractured in the cross-sectional direction and the thickness of an embossed section was observed with a VE-8800 scanning electron microscope by Keyence Corp. The magnification was 200x, and the thickness was measured at a total of 5 points: locations at the center of the embossed section, 20 μm on either side of the center, and 20 μm further outward on either side. Three points were used as data for each embossed section, discarding the maximum and minimum of the 5 points, and the embossed section thickness was recorded as the average of the thicknesses at a total of 15 points (5 embossed sections). The value was divided by the square root of the basis weight of the nonwoven fabric and used as the thickness index. The basis weight is basically measured by the method according to (1), but when a sufficient sample size cannot be obtained, measurement may be made using another arbitrary size such as 5 cm-square.

(11) Value I∥/I⊥ of ratio of peak intensity (I∥) at 1612 cm$^{-1}$ in Raman spectrum measured with polarized light parallel to the fiber axes with respect to peak intensity (I⊥) at 1612 cm$^{-1}$ in the Raman spectrum measured with polarized light perpendicular to fiber axes

Using an InViaReflex Raman spectrophotometer by Renishaw Co., one arbitrary fiber in the fiber layer (I) of the sample was measured for peak intensity (I∥) at 1612 cm$^{-1}$ in the polarized Raman spectrum, with the sample set with its fiber axes parallel to the plane of polarization of the excitation light. The sample was then rotated 90° and the peak intensity (I⊥) at 1612 cm$^{-1}$ was measured in the polarized Raman spectrum with the plane of polarization of the excitation light perpendicular to the fiber axes. The ratio of (I∥) to (I⊥) (I∥/I⊥) was calculated as the average for 10 fibers. A larger value for (I∥/I⊥) is considered to be higher orientation of molecular chains with respect to the fiber axes. The optical axis of the polarizer on the detection side in the polarized Raman spectrum was measured while parallel to the optical axis of the excitation light.

The measuring conditions with the Raman spectrophotometer were as follows.

(Measuring conditions)

Laser wavelength: 532 nm
Excitation light intensity at measuring location: 1.5 mW
Objective lens: 20x (NA0.40)
Diffraction grating: 1800 gr/mm
Exposure time: 2 sec
Number of scans: 4

(12) Approximation of SS curve obtained by stretching biodegradable nonwoven fabric at 70°C, within displacement zone of 0 mm to 40 mm

An AG-X plus autograph by Shimadzu Corp. (load cell: 1 kN) was used to hold a 30 mm-width sample at an ambient temperature of 70°C for 1 minute, and after the SS curve obtained by stretching with an elongation origin of 0.1% FS, a grip length of 20 mm, a pull rate of 200 mm/min was displayed in a Microsoft Excel graph, the curve was extended up to a displacement of 40 mm. The Excel tool "Add fitted curve" was applied to the graph and "Polynomial approximation: quartic" was selected for quartic function approximation. The SS curve used was obtained by conducting 10 measurements in the machine direction of the nonwoven fabric and selecting the SS curve with rupture stress nearest to the average.

(13) Moldability

Using two different cylindrical molded metals, one with a diameter of 4.4 cm and a height of 1.5 cm (15 mm) and the other with a diameter of 4.4 cm and a height of 3.0 cm (30 mm), the conditions of molded articles after press molding with a pressing temperature of 70°C and a pressing time of 1.0 second were observed and evaluated on the following scale. The number of broken filaments on the surface was determined by summing the number of broken filaments on the surface of each molded article and calculating the average value for N = 10.

[Evaluation scale]

VG: No more than one tear per 100 molded articles, and no more than 3 broken filaments on the surface.

G: 2 to 5 tears per 100 molded articles, or 4 to 9 broken filaments on the surface.
F: 10 or more problems such as marks, stretch marks and/or broken filaments on the molded article surface.

P: No molded article obtained due to tearing.

(14) Shrink back property of molded article (dimensional change immediately after die release)

The rate of change in height of the actually obtained molded article with respect to the theoretical height of the molded article fabricated by the method of (13) above was calculated as the average value for N = 5. Assessment was made based on the rate of change in height, on the following scale.

[Evaluation scale]

5: Molded article height change within $\pm 20\%$
4: Molded article height change > $\pm 20\%$ and $\leq \pm 30\%$
3: Molded article height change > $\pm 30\%$ and $\leq \pm 40\%$
2: Molded article height change > $\pm 40\%$ and $\leq \pm 50\%$
1: Molded article height change > $\pm 50\%$.

[Examples 27 to 41]

Biodegradable nonwoven fabrics were produced in the same manner as Example 15, except that the traction, roll temperature and roll pressure were changed.

[Examples 42 and 43]

Biodegradable nonwoven fabrics were produced in the same manner as Example 39, except that polybutylene succinate and polycaprolactone were added as accessory components.

[Example 44]

As staple fibers there was used a raw stock of polybutylene adipate terephthalate with a monofilament fiber diameter of 30 $\mu$m, which was passed through a carding machine to produce a nonwoven cloth web with a basis weight of 150 g/m$^2$. The produced web was then set on a 100 mesh wire net and a high-pressure liquid flow treatment device having 0.08 mm-diameter injection holes arranged at 0.7 mm hole spacings was used for high-pressure liquid flow treatment to integrate the web. The injection conditions for liquid flow were once at a water pressure of 60 kg/cm$^2$ and once at a water pressure of 120 kg/cm$^2$. From the opposite side, the conditions were once at a water pressure of 120 kg/cm$^2$. Drying treatment was then carried out using a hot air drier at 70°C to remove the excess moisture content from the obtained web. Next, a pair of embossing rolls having a concavoconvex pattern on one roll surface was used for thermocompression bonding under conditions with a contact bonding area ratio of 14%, a temperature of 55°C on both the upper and lower rolls, and a roll linear pressure of 60 N/mm, to obtain a biodegradable nonwoven fabric with a basis weight of 150 g/m$^2$.

[Example 45]

On a web fabricated in the same manner as Example 39 except for adjusting the line speed for a basis weight of 68.0 g/m$^2$ (basis weight: 68.0 g/m$^2$) there was formed a meltblown web (basis weight: 14.0 g/m$^2$, mean fiber size: 2.1 $\mu$m) by directly ejecting PBAT (melting point: 110°C, shear viscosity: 13 Pa·s at 1000/sec shear rate at 230°C) from a melt blown nozzle under conditions of 1000 Nm$^3$/hr with a spinning temperature of 210°C and a heated air of 230°C. During this step, the distance from the melt blown nozzle to the spunbond web was 110 mm, with the suction wind speed set to 7 m/sec at the collecting surface directly under the melt blown nozzle. A similar spunbond web made of polylactic acid was further formed over the obtained meltblown web. The obtained layered web was thermocompression bonded in the same manner as Example 39 to obtain a nonwoven fabric with a total basis weight of 150.0 g/m$^2$.

[Example 46]

A biodegradable nonwoven fabric was produced in the same manner as Example 45, except that for the first spunbond layer, the monofilament cross-section form was a sheath-core with a sheath-core ratio of 50/50 wt%, using PBAT on the core side and PBSA on the sheath side.

Tables 5 to 7 show the physical properties and evaluation results for the nonwoven fabrics of Examples 27 to 36.

In the tables, for the SS curves obtained by stretching the biodegradable nonwoven fabric at 70°C, "conditions A" represent the case where the SS curve approximation in the displacement zone of 0 to 40 mm was $y = -2.6 \times 10^{-6} \times x^4 + 0.0003x^3 - 0.0112x^2 + 0.2474x - 0.0059$ to $y = -3.5 \times 10^{-5} \times x^4 + 0.0032x^3 - 0.1146x^2 + 2.1105x + 0.3381$, "conditions B" represent the case of $y = -2.6 \times 10^{-6} \times x^4 + 0.0003x^3 - 0.0112x^2 + 0.2474x - 0.0059$ to $y = -2.9 \times 10^{-5} \times x^4 + 0.0026x^3 - 0.0947x^2 + 1.7434x + 0.2793$, "conditions C" represent the case of $y = -2.6 \times 10^{-6} \times x^4 + 0.0003x^3 - 0.0112x^2 + 0.2474x - 0.0059$ to $y = -8 \times 10^{-6} \times x^4 + 0.0007x^3 - 0.0282x^2 + 0.8017x + 0.2779$, and "conditions D" represent the case of $y = -5 \times 10^{-6} \times x^4 + 0.0006x^3 - 0.022x^2 + 0.4841x - 0.0115$ to $y = -7 \times 10^{-6} \times x^4 + 0.0006x^3 - 0.0256x^2 + 0.7511x + 0.211$.

[Table 5]

Table 5

| | | | Example 27 | Example 28 | Example 29 | Example 30 | Example 31 | Example 32 | Example 33 | Example 34 | Example 35 | Example 36 |
|---|---|---|---|---|---|---|---|---|---|---|---|---|
| Main component resin | Type | - | PBAT | PBAT | PBAT | PBAT | PBAT | PBAT | PBAT | PBAT | PBAT | PBAT |
| | Content | mass% | 100 | 100 | 100 | 100 | 100 | 100 | 100 | 100 | 100 | 100 |
| | Glass transition temperature (Tg) | °C | -30 | -30 | -30 | -30 | -30 | -30 | -30 | -30 | -30 | -30 |
| | Melting point (Tm) | °C | 120 | 120 | 120 | 120 | 120 | 120 | 120 | 120 | 120 | 120 |
| Accessory component resin | Type | - | - | - | - | - | - | - | - | - | - | - |
| | Content | mass% | - | - | - | - | - | - | - | - | - | - |
| | Glass transition temperature (Tg) | °C | - | - | - | - | - | - | - | - | - | - |
| | Melting point (Tm) | °C | - | - | - | - | - | - | - | - | - | - |
| Traction | | mN/m | 84 | 84 | 75 | 63 | 52 | 46 | 38 | 27 | 52 | 52 |
| Embossing temperature | | °C | 70 | 85 | 70 | 65 | 55 | 50 | 43 | 40 | 70 | 65 |
| Embossing pressure | | N/mm | 20 | 20 | 20 | 20 | 20 | 20 | 20 | 20 | 40 | 40 |
| Basis weight | | g/m$^2$ | 150 | 150 | 150 | 150 | 150 | 150 | 150 | 150 | 150 | 150 |
| Shear viscosity at 230°C, shear rate x | x = 20/s | Pa·s | 86.0 | 86.0 | 86.0 | 86.0 | 86.0 | 86.0 | 86.0 | 86.0 | 86.0 | 86.0 |
| | x = 100/s | Pa·s | 63.0 | 63.0 | 63.0 | 63.0 | 63.0 | 63.0 | 63.0 | 63.0 | 63.0 | 63.0 |
| | x = 500/s | Pa·s | 43.0 | 43.0 | 43.0 | 43.0 | 43.0 | 43.0 | 43.0 | 43.0 | 43.0 | 43.0 |
| | x = 1000/s | Pa·s | 34.0 | 34.0 | 34.0 | 34.0 | 34.0 | 34.0 | 34.0 | 34.0 | 34.0 | 34.0 |
| | x = 2000/s | Pa·s | 27.0 | 27.0 | 27.0 | 27.0 | 27.0 | 27.0 | 27.0 | 27.0 | 27.0 | 27.0 |
| | x = 10,000/s | Pa·s | 10.0 | 10.0 | 10.0 | 10.0 | 10.0 | 10.0 | 10.0 | 10.0 | 10.0 | 10.0 |

| | | Example 27 | Example 28 | Example 29 | Example 30 | Example 31 | Example 32 | Example 33 | Example 34 | Example 35 | Example 36 |
|---|---|---|---|---|---|---|---|---|---|---|---|
| Shear viscosity of $\leq$ -41.4ln(x) + 500.84 | - | Y | Y | Y | Y | Y | Y | Y | Y | Y | Y |
| Shear viscosity of $\leq$ -36.8ln(x) + 366.03 | - | Y | Y | Y | Y | Y | Y | Y | Y | Y | Y |
| Shear viscosity of $\leq$ -25.46ln(x) + 257.11 | - | Y | Y | Y | Y | Y | Y | Y | Y | Y | Y |
| Shear viscosity of $\geq$ -5.45ln(x) + 50.759 | - | Y | Y | Y | Y | Y | Y | Y | Y | Y | Y |
| Shear viscosity of $\geq$ -10.17ln(x) + 98.781 | - | Y | Y | Y | Y | Y | Y | Y | Y | Y | Y |
| Shear viscosity of $\geq$ -10.95ln(x) + 109.1 | - | Y | Y | Y | Y | Y | Y | Y | Y | Y | Y |
| Thickness | mm | 0.50 | 0.47 | 0.42 | 0.37 | 0.37 | 0.41 | 0.39 | 0.40 | 0.32 | 0.36 |
| Bulk density | $g/cm^3$ | 0.30 | 0.32 | 0.36 | 0.41 | 0.40 | 0.37 | 0.39 | 0.38 | 0.47 | 0.42 |
| Embossed section thickness | mm | 0.0534 | 0.0496 | 0.0444 | 0.0387 | 0.0397 | 0.043 | 0.041 | 0.042 | 0.0337 | 0.0377 |
| Embossed section thickness index | $mm/(g/m^2)^{0.5}$ | 4.36 | 4.05 | 3.63 | 3.16 | 3.24 | 3.51 | 3.35 | 3.43 | 2.75 | 3.08 |
| I∥/I⊥ | - | 6.1 | 4.8 | 2.9 | 2.4 | 1.9 | 1.7 | 1.4 | 1.2 | 2.7 | 2.5 |
| SS curve obtained by extension at 70°C having yield point in 0-40 mm displacement zone | - | Y | Y | Y | Y | Y | Y | Y | Y | Y | Y |

EP 4 397 798 A1

| | | | | | | | | | | | | | |
|---|---|---|---|---|---|---|---|---|---|---|---|---|---|
| Approximation of SS curve obtained by extension at 70°C satisfying conditions A | | | - | Y | Y | Y | Y | Y | Y | Y | Y | Y | Y |
| Approximation of SS curve obtained by extension at 70°C satisfying conditions B | | | - | N | N | Y | Y | Y | Y | Y | Y | Y | Y |
| Approximation of SS curve obtained by extension at 70°C satisfying conditions C | | | - | N | N | N | Y | Y | Y | Y | Y | N | Y |
| Approximation of SS curve obtained by extension at 70°C satisfying conditions D | | | - | N | N | N | Y | Y | Y | Y | N | N | Y |
| Biodegradability | | Industrial | - | Y | Y | Y | Y | Y | Y | Y | Y | Y | Y |
| | | Home | - | Y | Y | Y | Y | Y | Y | Y | Y | Y | Y |
| | | Soil | - | Y | Y | Y | Y | Y | Y | Y | Y | Y | Y |
| | | Marine | - | N | N | N | N | N | N | N | N | N | N |
| Texture | | | - | 5 | 5 | 5 | 5 | 5 | 5 | 5 | 5 | 5 | 5 |
| Uniformity of dispersion | | | - | 4 | 4 | 4 | 4 | 4 | 4 | 4 | 4 | 4 | 4 |
| Moldability (15 mm) | | | - | N | Y | Y | Y | Y | Y | Y | Y | Y | Y |
| Moldability (30 mm) | | | - | N | N | F | F | F | F | Y | Y | F | Y |
| Molded article shrink back (15 mm) | | | - | - | 1 | 2 | 4 | 4 | 5 | 5 | 5 | 2 | 4 |
| Molded article shrink back (30 mm) | | | - | - | - | 1 | 2 | 4 | 4 | 5 | 5 | 1 | 4 |

[Table 6]

Table 6

| | | | Example 37 | Example 38 | Example 39 | Example 40 | Example 41 | Example 42 | Example 43 | Example 44 |
|---|---|---|---|---|---|---|---|---|---|---|
| Main component resin | Type | - | PBAT | PBAT | PBAT | PBAT | PBAT | PBAT | PBAT | PBAT |
| | Content | mass% | 100 | 100 | 100 | 100 | 100 | 80 | 80 | 100 |
| | Glass transition temperature (Tg) | °C | -30 | -30 | -30 | -30 | -30 | -30 | -30 | -30 |
| | Melting point (Tm) | °C | 120 | 120 | 120 | 120 | 120 | 120 | 120 | 120 |
| Accessory component resin | Type | - | - | - | - | - | - | PBSA | PCL | - |
| | Content | mass% | - | - | - | - | - | 20 | 20 | - |
| | Glass transition temperature (Tg) | °C | - | - | - | - | - | -35 | -60 | - |
| | Melting point (Tm) | °C | - | - | - | - | - | 94 | 60 | - |
| Traction | | mN/m | 52 | 52 | 52 | 52 | 52 | | | 52 |
| Embossing temperature | | °C | 60 | 55 | 55 | 55 | 45 | 55 | 55 | 55 |
| Embossing pressure | | N/mm | 40 | 40 | 60 | 80 | 80 | 60 | 60 | 60 |
| Basis weight | | g/m$^2$ | 150 | 150 | 150 | 150 | 150 | 150 | 150 | 150 |
| Shear viscosity at 230°C, shear rate x | x = 20/s | Pa·s | 86.0 | 86.0 | 86.0 | 86.0 | 86.0 | 88.0 | 84.0 | 86.0 |
| | x = 100/s | Pa·s | 63.0 | 63.0 | 63.0 | 63.0 | 63.0 | 63.0 | 60.0 | 63.0 |
| | x = 500/s | Pa·s | 43.0 | 43.0 | 43.0 | 43.0 | 43.0 | 45.0 | 40.0 | 43.0 |
| | x = 1000/s | Pa·s | 34.0 | 34.0 | 34.0 | 34.0 | 34.0 | 45.0 | 29.0 | 34.0 |
| | x = 2000/s | Pa·s | 27.0 | 27.0 | 27.0 | 27.0 | 27.0 | 28.0 | 24.0 | 27.0 |
| | x = 10,000/s | Pa·s | 10.0 | 10.0 | 10.0 | 10.0 | 10.0 | 12.0 | 8.00 | 10.0 |
| Shear viscosity of $\leq$ -41.4ln(x) + 500.84 | | - | Y | Y | Y | Y | Y | Y | Y | Y |
| Shear viscosity of $\leq$ -36.8ln(x) + 366.03 | | - | Y | Y | Y | Y | Y | Y | Y | Y |
| Shear viscosity of $\leq$ -25.46ln(x) + 257.11 | | - | Y | Y | Y | Y | Y | Y | Y | Y |
| Shear viscosity of $\geq$ -5.45ln(x) + 50.759 | | - | Y | Y | Y | Y | Y | Y | Y | Y |

| | | Example 37 | Example 38 | Example 39 | Example 40 | Example 41 | Example 42 | Example 43 | Example 44 |
|---|---|---|---|---|---|---|---|---|---|
| Shear viscosity of ≥ -10.17ln(x) + 98.781 | - | Y | Y | Y | Y | Y | Y | Y | Y |
| Shear viscosity of ≥ -10.95ln(x) + 109.1 | - | Y | Y | Y | Y | Y | Y | Y | Y |
| Thickness | mm | 0.37 | 0.38 | 0.39 | 0.38 | 0.39 | 0.39 | 0.39 | 0.42 |
| Bulk density | g/cm$^3$ | 0.41 | 0.39 | 0.39 | 0.40 | 0.38 | 0.39 | 0.38 | 0.36 |
| Embossed section thickness | mm | 0.0387 | 0.0418 | 0.0408 | 0.0398 | 0.0418 | 0.0408 | 0.0418 | 0.0418 |
| Embossed section thickness index | mm/ (g/m$^2$)$^{0.5}$ | 3.16 | 3.41 | 3.33 | 3.25 | 3.41 | 3.33 | 3.41 | 3.41 |
| I∥/I⊥ | - | 2.1 | 1.9 | 2.0 | 2.0 | 1.8 | 1.6 | 1.5 | 1.8 |
| SS curve obtained by extension at 70°C having yield point in 0-40 mm displacement zone | - | Y | Y | Y | Y | Y | Y | Y | Y |
| Approximation of SS curve obtained by extension at 70°C satisfying conditions A | - | Y | Y | Y | Y | Y | Y | Y | Y |
| Approximation of SS curve obtained by extension at 70°C satisfying conditions B | - | Y | Y | Y | Y | Y | Y | Y | Y |
| Approximation of SS curve obtained by extension at 70°C satisfying conditions C | - | Y | Y | Y | Y | Y | Y | Y | Y |
| Approximation of SS curve obtained by extension at 70°C satisfying conditions D | - | Y | Y | Y | Y | Y | Y | Y | Y |
| Biodegradability | Industrial | - | Y | Y | Y | Y | Y | Y | Y | Y |
| | Home | - | Y | Y | Y | Y | Y | Y | Y | Y |
| | Soil | - | Y | Y | Y | Y | Y | Y | Y | Y |
| | Marine | - | N | N | N | N | N | N | N | N |
| Texture | - | 5 | 5 | 5 | 5 | 5 | 5 | 5 | 5 |
| Uniformity of dispersion | - | 4 | 4 | 4 | 4 | 4 | 4 | 4 | 4 |
| Moldability (15 mm) | - | Y | Y | Y | Y | Y | Y | Y | Y |
| Moldability (30 mm) | - | Y | Y | Y | Y | Y | Y | Y | Y |

| | | Example 37 | Example 38 | Example 39 | Example 40 | Example 41 | Example 42 | Example 43 | Example 44 |
|---|---|---|---|---|---|---|---|---|---|
| Molded article shrink back (15 mm) | - | 5 | 5 | 5 | 5 | 5 | 5 | 5 | 5 |
| Molded article shrink back (30 mm) | - | 5 | 5 | 5 | 5 | 5 | 5 | 5 | 5 |

[Table 7]

Table 7

|  |  |  |  | Example 45 | Example 46 |
|---|---|---|---|---|---|
| First layer | Main compo nent resin | Type | - | PBAT | PBAT |
|  |  | Content | mass% | 45.3 | 22.7 |
|  |  | Glass transition temperature (Tg) | °C | -30 | -30 |
|  |  | Melting point (Tm) | °C | 120 | 120 |
|  | Access ory compo nent resin | Type | - | - | PBSA |
|  |  | Content | mass% | - | 22.7 |
|  |  | Glass transition temperature (Tg) | °C | - | -35 |
|  |  | Melting point (Tm) | °C | - | 94 |
|  | Basis weight |  | g/m² | 68 | 68 |
| Second layer | Resin | Type | - | PBAT | PBAT |
|  |  | Content | mass% | 9.3 | 9.3 |
|  | Fiber diameter |  | μm | 2.1 | 2.1 |
|  | Basis weight |  | g/m² | 14 | 14 |
| Third layer | Main compo nent resin | Type | - | PBAT | PBAT |
|  |  | Content | mass% | 45.3 | 45.3 |
|  |  | Glass transition temperature (Tg) | °C | -30 | -30 |
|  |  | Melting point (Tm) | °C | 120 | 120 |
|  | Access ory compo nent resin | Type | - | - | - |
|  |  | Content | mass% | - | - |
|  |  | Glass transition temperature (Tg) | °C | - | - |
|  |  | Melting point (Tm) | °C | - | - |
|  | Basis weight |  | g/m² | 68 | 68 |
| Traction |  |  | mN/m | 52 | 52 |
| Embossing temperature |  |  | °C | 55 | 55 |
| Embossing pressure |  |  | N/mm | 60 | 60 |
| Basis weight |  |  | g/m² | 150 | 150 |

(continued)

| | | | Example 45 | Example 46 |
|---|---|---|---|---|
| Shear viscosity at 230°C, shear rate x | x = 20/s | Pa·s | 86.0 | 86.0 |
| | x = 100/s | Pa·s | 63.0 | 63.0 |
| | x = 500/s | Pa·s | 43.0 | 43.0 |
| | x = 1000/s | Pa·s | 34.0 | 34.0 |
| | x = 2000/s | Pa·s | 27.0 | 27.0 |
| | x = 10,000/s | Pa·s | 10.0 | 10.0 |
| Shear viscosity of $\leq$ -41.4ln(x) + 500.84 | | - | Y | Y |
| Shear viscosity of $\leq$ -36.8ln(x) + 366.03 | | - | Y | Y |
| Shear viscosity of $\leq$ -25.46ln(x) + 257.11 | | - | Y | Y |
| Shear viscosity of $\geq$ -5.45ln(x) + 50.759 | | - | Y | Y |
| Shear viscosity of $\geq$ -10.17ln(x) + 98.781 | | - | Y | Y |
| Shear viscosity of $\geq$ -10.95ln(x) + 109.1 | | - | Y | Y |
| Thickness | | Mm | 0.38 | 0.35 |
| Bulk density | | g/cm$^3$ | 0.39 | 0.43 |
| Embossed section thickness | | Mm | 0.0418 | 0.0405 |
| Embossed section thickness index | | mm/ (g/m$^2$)$^{0.5}$ | 3.41 | 3.31 |
| I∥/I⊥ | | - | 1.9 | 1.9 |
| SS curve obtained by extension at 70°C having yield point in 0-40 mm displacement zone | | - | Y | Y |
| Approximation of SS curve obtained by extension at 70°C satisfying conditions A | | - | Y | Y |
| Approximation of SS curve obtained by extension at 70°C satisfying conditions B | | - | Y | Y |
| Approximation of SS curve obtained by extension at 70°C satisfying conditions C | | - | Y | Y |
| Approximation of SS curve obtained by extension at 70°C satisfying conditions D | | - | Y | Y |
| Biodegradability | Industrial | - | Y | Y |
| | Home | - | Y | Y |
| | Soil | - | Y | Y |
| | Marine | - | N | N |
| Texture | | - | 5 | 5 |
| Uniformity of dispersion | | - | 4 | 4 |
| Moldability (15 mm) | | - | Y | Y |
| Moldability (30 mm) | | - | Y | Y |
| Molded article shrink back (15 mm) | | - | 5 | 5 |
| Molded article shrink back (30 mm) | | - | 5 | 5 |

INDUSTRIAL APPLICABILITY

The biodegradable nonwoven fabric of the invention is biodegradable while exhibiting excellent texture, and it can therefore be suitably used in a wide variety of fields including medical and hygiene materials, industrial materials, vehicle interior and exterior materials, soundproof materials, sound-absorbing materials, part transport trays, fruit and vegetable trays, food containers, agricultural materials such as seedling pods and mulch sheets, light packaging materials and filters.

**Claims**

1. A biodegradable nonwoven fabric composed of fibers that include a biodegradable thermoplastic resin, wherein the shear viscosity is greater than 0 Pa·s and no greater than $-41.4 \times \ln(x) + 500.84$ Pa·s, assuming a shear rate "x" (where x is 20/s to 10,000/s) at 230°C.

2. The biodegradable nonwoven fabric according to claim 1, wherein the shear viscosity is $-5.45 \times \ln(x) + 50.759$ Pa·s or greater, assuming a shear rate "x" (where x is 20/s to 10,000/s) at 230°C.

3. The biodegradable nonwoven fabric according to claim 1 or 2, wherein the shear viscosity is $-36.8 \times \ln(x) + 366.03$ Pa·s or lower, assuming a shear rate "x" (where x is 20/s to 10,000/s) at 230°C.

4. The biodegradable nonwoven fabric according to claim 1 or 2, wherein the shear viscosity is $-25.46 \times \ln(x) + 257.11$ Pa·s or lower, assuming a shear rate "x" (where x is 20/s to 10,000/s) at 230°C.

5. The biodegradable nonwoven fabric according to claim 1 or 2, wherein the glass transition temperature is 25°C or lower, as measured with temperature increase at a rate of 10°C/min using a differential scanning calorimeter.

6. The biodegradable nonwoven fabric according to claim 1 or 2, wherein the biodegradable thermoplastic resin is one or more selected from the group consisting of polybutylene succinate adipate, polybutylene adipate terephthalate, polyhydroxy butyrate valerate and polyhydroxy butyrate butyrate.

7. The biodegradable nonwoven fabric according to claim 6, wherein the biodegradable thermoplastic resin is polybutylene adipate terephthalate.

8. The biodegradable nonwoven fabric according to claim 1 or 2, which has embossed sections and non-embossed sections, the embossed section thickness index, as the thickness of the embossed sections divided by the square root of the basis weight, being 2.75 to 4.36 mm/(g/m$^2$)$^{0.5}$.

9. The biodegradable nonwoven fabric according to claim 1 or 2, wherein based on polarized Raman spectroscopy of the fibers forming the biodegradable nonwoven fabric, the value I∥/I⊥ of the ratio of the peak intensity I∥/ at 1612 cm$^{-1}$ in the Raman spectrum measured with polarized light parallel to the fiber axes with respect to the peak intensity I⊥ at 1612 cm$^{-1}$ in the Raman spectrum measured with polarized light perpendicular to the fiber axes is higher than 1.08 and 2.9 or lower.

10. The biodegradable nonwoven fabric according to claim 1 or 2, which is for thermoforming.

11. The biodegradable nonwoven fabric according to claim 6, which has embossed sections and non-embossed sections, the embossed section thickness index, as the thickness of the embossed sections divided by the square root of the basis weight, being 2.75 to 4.36 mm/(g/m$^2$)$^{0.5}$, and which is for thermoforming.

12. A food filter which includes a biodegradable nonwoven fabric according to claim 1 or 2.

13. The food filter according to claim 12, which is a coffee filter or tea bag filter.

14. A mask which includes a biodegradable nonwoven fabric according to claim 1 or 2.

15. A diaper which includes a biodegradable nonwoven fabric according to claim 1 or 2.

16. An agricultural material which includes a biodegradable nonwoven fabric according to claim 1 or 2.

17. A light packaging material which includes a biodegradable nonwoven fabric according to claim 1 or 2.

**INTERNATIONAL SEARCH REPORT**

| International application No. |
| --- |
| **PCT/JP2022/031764** |

| A. | CLASSIFICATION OF SUBJECT MATTER |
| --- | --- |

*D04H 3/011*(2012.01)i; *A41D 13/11*(2006.01)i; *A61F 13/15*(2006.01)i; *D04H 1/435*(2012.01)i
FI: D04H3/011; A41D13/11 Z; A61F13/15 120; D04H1/435

According to International Patent Classification (IPC) or to both national classification and IPC

| B. | FIELDS SEARCHED |
| --- | --- |

Minimum documentation searched (classification system followed by classification symbols)
D04H1/00-18/04; A41D13/00-13/12; A61F13/15-13/84

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107794593 A (CHINA PETROLEUM & CHEMICAL CORP.) 13 March 2018 (2018-03-13) paragraphs [0037]-[0068], [0117]-[0119], table 3, fig. 1-3, 6 | 1-5 |
| X | JP 2008-222883 A (NAGOYA CITY) 25 September 2008 (2008-09-25) claim 1, paragraphs [0001], [0039], examples, fig. 2 | 1-4 |
| Y | | 1-4, 6-17 |
| Y | WO 2021/054465 A1 (ASAHI KASEI KABUSHIKI KAISHA) 25 March 2021 (2021-03-25) claims 1, 7-8, paragraphs [0018]-[0020], [0085] | 1-4, 6-17 |
| Y | WO 2017/145993 A1 (ASAHI KASEI KABUSHIKI KAISHA) 31 August 2017 (2017-08-31) claims 1, 4, 8, 11, paragraphs [0009], [0013], [0021]-[0026], [0031], [0063] | 8-9, 11, 14 |
| Y | JP 6-248511 A (KURARAY CO., LTD.) 06 September 1994 (1994-09-06) paragraph [0020] | 12-13, 16 |
| Y | JP 7-48768 A (SHOWA HIGHPOLYMER CO., LTD.) 21 February 1995 (1995-02-21) paragraph [0044] | 12-13, 16 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 October 2022** | **01 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/031764**

| Patent document cited in search report | | | Publication date (day/month/year) | Patent family member(s) | | | Publication date (day/month/year) |
|---|---|---|---|---|---|---|---|
| CN | 107794593 | A | 13 March 2018 | (Family: none) | | | |
| JP | 2008-222883 | A | 25 September 2008 | (Family: none) | | | |
| WO | 2021/054465 | A1 | 25 March 2021 | CN | 114341417 | A | |
| | | | | TW | 202123868 | A | |
| WO | 2017/145993 | A1 | 31 August 2017 | CN | 108699745 | A | |
| | | | | TW | 201732108 | A | |
| JP | 6-248511 | A | 06 September 1994 | (Family: none) | | | |
| JP | 7-48768 | A | 21 February 1995 | US abstract | 5525409 | A | |
| | | | | EP | 569148 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021054465 A

- WO 2018070490 A